# EUROPEAN PATENT SPECIFICATION

(11) **EP 2 528 759 B1**
(45) Date of publication and mention of the grant of the patent: **05.11.2014**
(21) Application number: 11703069.2
(22) Date of filing: 19.01.2011
(51) Int. Cl.: B60H 1/00, B60H 1/32, F25B 27/00

(54) **SOLAR POWER ASSISTED TRANSPORT REFRIGERATION SYSTEMS, TRANSPORT REFIGERATION UNITS AND METHODS FOR SAME**
SOLARSTROMGETRIEBENES TRANSPORTKÜHLSYSTEM, TRANSPORTKÜHLEINHEITEN UND VERFAHREN DAFÜR
SYSTÈMES DE RÉFRIGÉRATION DE TRANSPORT ASSISTÉS PAR ÉNERGIE SOLAIRE, UNITÉS DE RÉFRIGÉRATION DE TRANSPORT ET PROCÉDÉS POUR CES SYSTÈMES ET UNITÉS

(30) Priority: 29.01.2010 US 299827 P
(43) Date of publication of application: 05.12.2012
(73) Proprietor: Carrier Corporation, Farmington, CT 06034 (US)
(72) Inventor: BLASKO, Vladimir, Avon CT 06001 (US); BENDAPUDI, Satyam, NY 13066 (US); OGGIANU, Stella, M., Manchester, CT 06042 (US)
(74) Representative: Taylor, Adam David
(86) International application number: PCT/US2011/021694
(87) International publication number: WO 2011/094099

(56) References cited:
- WO-A1-2004/065865
- DE-A1-102008 009 848
- US-A- 5 479 557
- US-A1- 2008 257 622
- US-B1- 6 253 563

## Description

This invention relates generally to the field of transport refrigeration systems and methods of operating the same, and more particularly to the integration of disparate power sources or energy storage device.

Transport refrigeration systems such as containers, truck, trailer, and bus, depend on fossil-fuel driven prime movers to provide the electrical energy needed to run the components of the transport refrigeration system. This fuel consumption is over and above what is required to operate the vehicle and becomes a significant added cost of operation. Solar panels have been used to support truck refrigeration. However, these related art systems manually switch between a fuel driven engine and the solar panel to separately provide the energy to the transport refrigeration system and required extra container insulation and downsizing of the original equipment to which the solar power is being applied to, which leads to either a performance penalty or a higher initial cost due to redesign or both.

US 2008/257622 discloses a transport refrigeration unit of the type described in the preamble of claim 1.

The invention provides a transport refrigeration system, comprising: a compressor; a first electric motor that provides a motive force to the compressor; at least one fan; a second electric fan motor that provides a motive force to the fan; a solar PV electrical power source; an electric energy power source; a engine driven generator electrical power source; and a power management controller coupled to route power selectively and concurrently from two of the electrical power sources to provide electrical power to the first motor and the second motor, wherein the received power is provided responsive to a dynamic load of the transport refrigeration system characterised in that: the power management controller comprises: an AC power bus to connect the engine driven generator electrical power source to the first electric motor and the second electric fan motor; a first control circuit connected to control the generator electrical power source; a first DC/ AC converter connected to the solar PV electrical power source and the AC power bus; a second control circuit connected to control the solar PV electrical power source; a second DC/ AC converter connected to the energy storage electrical power source and the AC power bus; and a third control circuit connected to control the energy storage electrical power source.

Perishable items must be maintained within a temperature range to reduce or prevent, depending on the items, spoilage, or conversely damage from freezing during transport. A transport refrigeration unit is used to maintain proper conditions within a transport cargo space. The transport refrigeration unit can regulate conditioned air delivery by the transport refrigeration unit to a container or the transport cargo space. The transport refrigeration unit can be under the direction of a controller that can operate a transport refrigeration system including a power management capability.

Embodiments of power management configurations and control architectures can integrate solar power into the electrical system of a transport refrigeration system.

Embodiments of power management systems and methods can integrate solar power into the electrical system of a transport refrigeration system to ensure real-time allocation of energy from disparate power sources into the refrigeration system, both as a function of load or demand, as well as of solar energy availability.

Embodiments of power management system can integrate solar power into the electrical system of a transport refrigeration system with no loss of functionality to the container during maintenance or shipping and handling of the container.

Embodiments of power management system can combine solar power into the electrical system of a transport refrigeration system and use peak power tracking to integrate use of the solar generated power.

In one embodiment, solar fabrics are used and attached to surfaces of the container or trailer body to allow removal and re-installation depending on operational needs (e.g., in the field).

One embodiment according to the application can include a control module for a transport refrigeration system for controlling an improved all-electric transport refrigeration system that receives its compressor drive motor power and all other electrical power concurrently from a combination of a solar photovoltaic (PV) system and fossil fuel driven prime movers.

One embodiment of a transport refrigeration system according to the application can include a power control module to control concurrent supply of electrical energy from a solar PV system, an engine driven generator, and batteries.

Novel features that are characteristic of exemplary embodiments of the invention are set forth with particularity in the claims. Embodiments of the invention itself may be best understood, with respect to its organization and method of operation, with reference to the following description of preferred embodiments taken in connection with the accompanying drawings in which:
FIG. 1 is diagram that schematically illustrates an exemplary transport refrigeration system having a compressor with an integrated electric drive motor powered by an electrical power system;
FIG. 2 is diagram that illustrates a power control apparatus for a transport refrigeration system;
FIG. 3 is a diagram that illustrates an exemplary embodiment of a power management system for a transport refrigeration system;
FIG. 4 is a diagram that shows exemplary power output characteristics of solar PV films; and
FIG. 5 is a diagram that illustrates an exemplary embodiment of a solar film mounting platform affixed to a container.

Reference will now be made in detail to exemplary embodiments of the application, examples of which are illustrated in the accompanying drawings. Whenever possible, the same reference numerals will be used throughout the drawings to refer to the same or like parts.

Transportation refrigeration systems can be offered in diverse architectures, for example, for use with trucks, truck-trailers, and containers. Refrigerant vapor compression systems used in connection with transport refrigeration systems are generally subject to more stringent operating conditions than in air conditioning or commercial refrigeration applications due to the wide range of operating load conditions and the wide range of outdoor ambient conditions over which the refrigerant vapor compression system must operate to maintain product within the cargo space at a desired temperature. The desired temperature at which the cargo needs to be controlled can also vary over a wide range depending on the nature of cargo to be preserved. The refrigerant vapor compression system must not only have sufficient capacity to rapidly pull down the temperature of product loaded into the cargo space at ambient temperature, but also operate efficiently at low load when maintaining a stable product temperature during transport. Additionally, transport refrigerant vapor compression systems are subject to cycling between an operating mode and standstill mode, e.g. , an idle state.

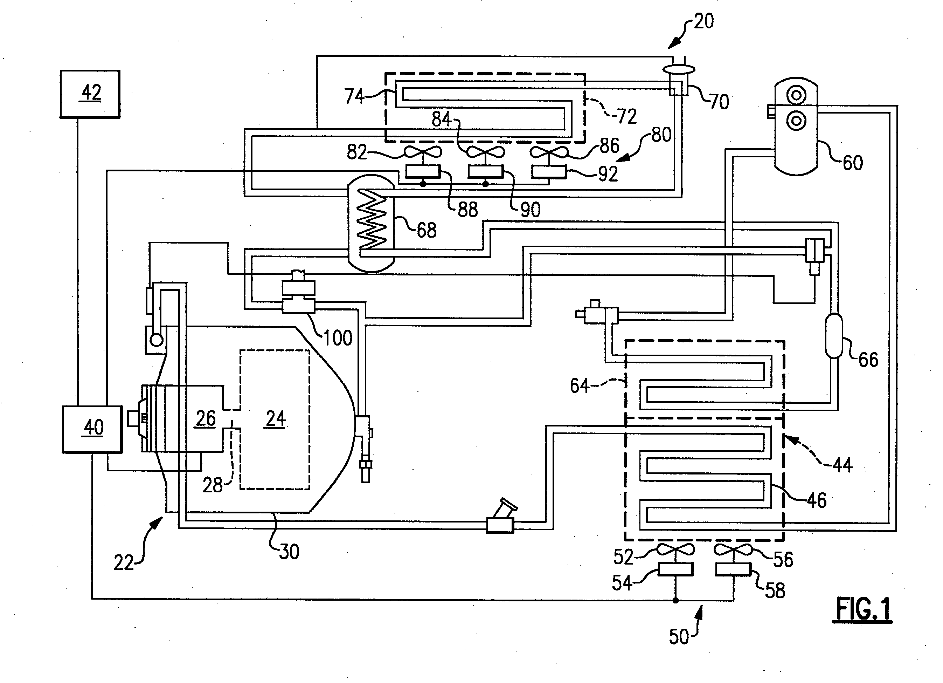

Fig. 1 is a diagram that shows an exemplary embodiment of a transport refrigeration system. Referring to FIG. 1, a trailer refrigeration system 20 is schematically illustrated with a compressor 22. A compressing mechanism 24, an electric compressor motor 26 and an interconnecting drive shaft 28 are all sealed within a common housing of the compressor 22. In one example, the compressor 22 is a variant of a 06D compressor manufactured by Carrier Corporation.

A power management system 40 that is capable of fully powering the internal electric motor 26 of the compressor preferably also provides power to satisfy the electrical requirements of other portions of the system 20 as will be explained. For example, the power management system 40 can integrate a plurality of disparate power sources into the system 20. In one embodiment, the power sources can include a solar PV system, batteries, and fuel driven prime movers (e.g., diesel engines). A controller 42, which may be a commercially available microprocessor, can be used to control power usage in the system 20 or incorporated into the power management system 40.

Operations of the refrigeration system 20 can be described starting at the compressor 22, where the refrigerant enters the compressor and is compressed to a higher temperature and pressure. Refrigerant gas then moves into the air-cooled condenser 44. Air flowing across a group of condenser coil fins and tubes 46 can cool the gas to its saturation temperature. The air flow across the condenser can be energized by a condenser fan assembly 50 having two fans. The illustrated example includes fan 52, electrical condenser fan motor 54 and fan 56 having electrical motor 58. The controller 42 can regulate power supply to the fan motors 54, 58.

By removing latent heat, the gas can condense to a high pressure/high temperature liquid and flow to a receiver 60 that provides storage for excess liquid refrigerant during low temperature operation. From the receiver 60, the liquid refrigerant can pass through a subcooler heat exchanger 64, through a filter dryer 66 that can keep the refrigerant cool and dry, then to a heat exchanger 68 that can increase the refrigerant subcooling, and then pass to a thermostatic expansion valve 70.

As the liquid refrigerant passes through the expansion valve 70, some of it vaporizes into a gas. Return air from the refrigerated space flows over the heat transfer surface of an evaporator 72. As refrigerant flows through tubes 74 in the evaporator 72, the remaining liquid refrigerant absorbs heat from the return air, and in so doing, can be vaporized. The air flow across the evaporator can be energized by an evaporator fan assembly 80. The illustrated example includes three fans 82, 84 and 86 that are respectively powered by electric fan motors 88, 90, and 92. The fan motors 88, 90 and 92 can receive their electrical power from the power management system 40. The controller 42 can control the consumption of power and operations of the fan motors 88, 90, 92 of the evaporator fan assembly.

Refrigerant vapor can flow through a suction modulation valve 100 back to the compressor 22 and integral drive motor 26. A thermostatic expansion valve bulb or sensor can be located on the evaporator outlet tube. The bulb can control the thermostatic expansion valve 70, to control refrigerant super-heating at the evaporator outlet tubing.

Exemplary embodiments of transport refrigeration systems integrate three energy systems: the generator for pull-down and off-solar operation, the solar films, and the battery system. Each of these energy sources has a distinct set of power characteristics that need to be conditioned before being fed between each other, or to the loads. The generator puts out 3 -phase AC, while the solar PV and the battery produce DC power. The power management system 40 can actively manage these energy sources to ensure performance, reliability, availability and/or energy efficiency. In one embodiment, inclusion of a storage system, which can be selected using a trade-off between weight, cost, and size, can provide dual functionality of capturing solar energy in excess of load, as well as a source for starting up the generator's engine.

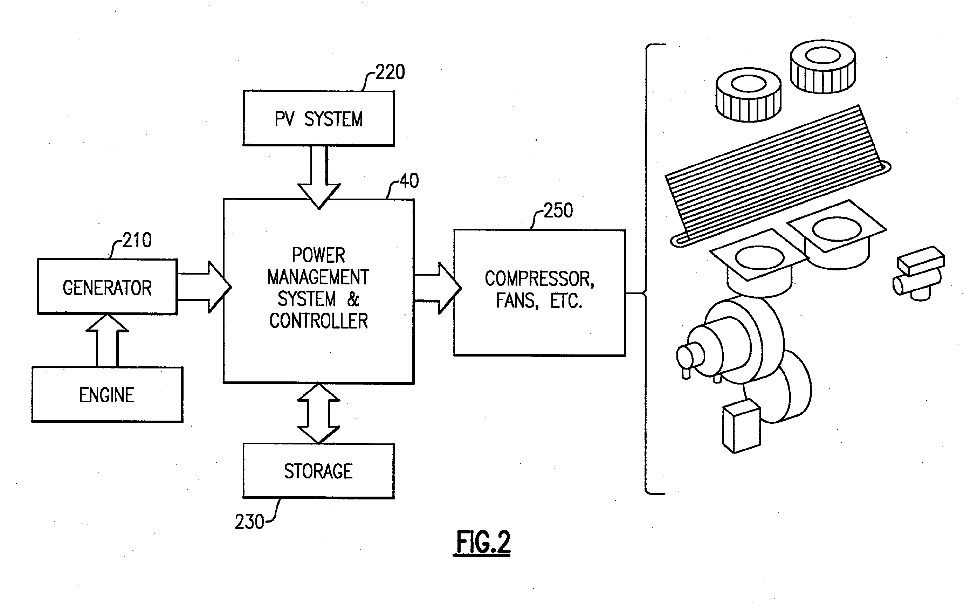

Exemplary connections of the power management system 40 are shown in FIG. 2. As shown in FIG. 2, the power management system 40 can transfer and receive power from generator 210, receive power from solar PV system 220, transfer and receive power from storage 230 (e.g., battery). The power management system 40 can transmit and receive control signals to and from the generator 210, the solar PV system 220, and the electrical energy storage 230.

The power management system 40 can controllably provide electrical energy for a dynamic load 250 of the transport refrigeration unit. The load 250 can include the AC driven and DC driven components. The power management system 40 can supply the power needed for the electrical motors associated with the compressor 22, condenser fan assembly 50, and the evaporator fan assembly 80.

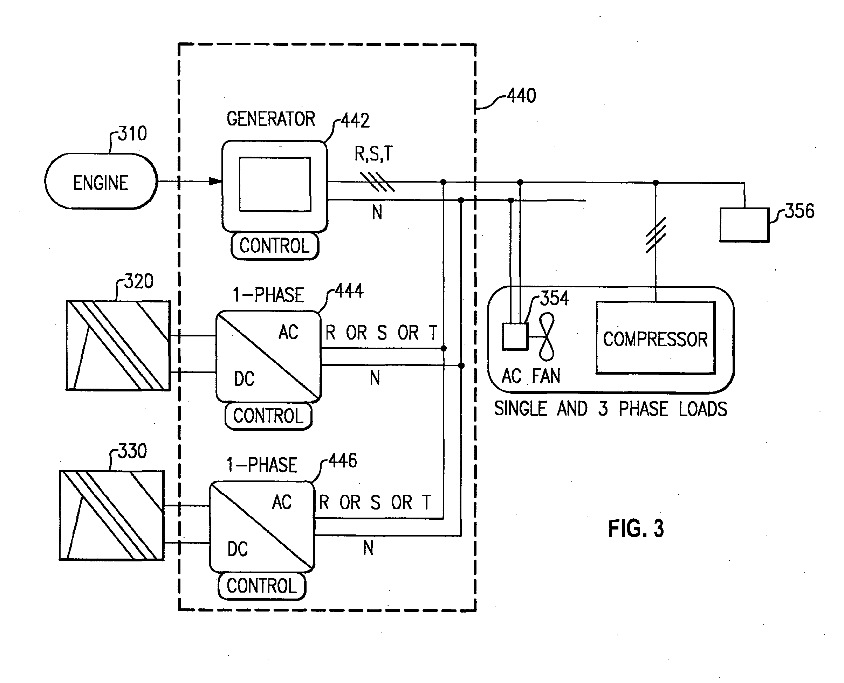

An exemplary embodiment of a power controller is shown in FIG. 3. As shown in FIG. 3, power management system and controller 440 is electrically coupled to generator 310, solar PV system 320 and electric energy source 330 (e.g., rechargeable battery).

The power management system and controller 440 can connect the generator 310, the solar PV system 320, and electric energy source 330 to an AC power bus coupled to components of the transport refrigeration unit. The generator 310 is connected to the compressor 22, AC fans and also optional additional electrically powered components 356. Driven by controller 442, the generator 310 can supply AC power to single phase loads (e.g., fans) and three phase loads (e.g., the compressor 24). Controller 444 is connected between the solar PV system 320 and load (single phase load) representing the transport refrigeration unit. Controller 446 is connected between the electric energy source 330 and the single phase load. The controllers 444, 446 can include DC/ AC converters to convert the DC to AC to enable the fans to retain AC motors and can synchronize the power and levels between the three sources. For example, additional electrically powered components 356 can include additional single phase AC load, a three phase AC load, or any DC load (e.g. , additional fans/compressor, additional heating system).

As shown in FIG. 3, the power management system and controller 440 requires little change in the load hardware. The power management system and controller 440 retains the AC motors for the fans, and enables single-phase and 3-phase loads as needed. The power management system and controller 440 can perform field matching and power matching between power supplied by different sources before it can be provided to the transport refrigeration unit. Such conditioning can be performed by hardware (e.g. , inverters) and/or software (e.g. using a processor or controller).

Exemplary engines used for generators can be operated inefficiently because the desired power output is constantly changing in response to needs of the transport refrigeration unit (e.g. , to maintain a constant temperature in a corresponding). In one embodiment, the power management system can size the incorporated storage system like a battery set so that the engine can operate (e.g. , always) at a steady condition or at least a much more predictable condition and/or reduce an amount of bouncing around or changing speeds/power level. Accordingly, the power management system can control whenever there is excess power it goes to store the excess electric energy for example in storage such as a battery and likewise, when there is insufficient power, the deficit can be drawn from storage or solar PV system. In one embodiment, the engine can be operated at a constant speed or peak efficiency point or RPM.

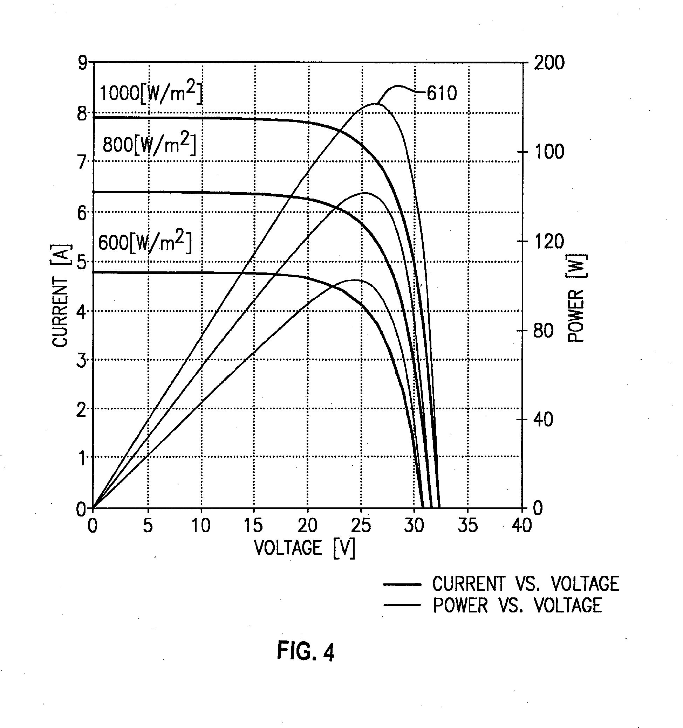

Embodiments of transport refrigeration systems and methods for same can integrate and provide concurrent use of the solar energy and/or the solar PV system 220. Electrical characteristics of solar PV films have power output that increases linearly with voltage up to a peak 610 as shown in FIG. 4. Beyond the peak 610, the output can drop rapidly. To increase utilization of the solar energy, and therefore increase or maximize fuel savings to the transport refrigeration systems, the power management controller needs to operate the solar PV system 220 at (or near and preferably before) the peak power point. Accordingly, in one embodiment, the power management system 40 can implement a maximum point tracking (e.g., solar power peak tracking) for the solar PV system to adjust the current and/or electrical energy drawn from the solar film to cause the solar PV system 220 to follow peak output under varying irradiance and load conditions

In situations when portions of the solar film are obscured (for example, under spotty clouds) or are otherwise compromised, the solar energy usage can still be increased or maximized by incorporating a health-monitoring system in the power management controller. For example, the power management system 40 can be designed to monitor the health and output of the solar films, and dynamically adjust the power drawn from the healthiest and/or highest output sections of the solar film to be different from the power drawn from damaged (permanent modification) or obscured (temporary modification) portions of the solar film. In one embodiment, the solar film can have modular unit construction to remove (e.g., electrically isolate) damaged portions from the solar PV system.

In one embodiment, the power management system and controller can use the storage to primarily drive the control priority. For example, the power management system and controller can prioritize electrical energy sources or storage (e.g., battery usage and/or lifetime), over control for the solar PV system or generator. In one embodiment, operations for battery lifetime and overall reduced power consumption can provide control requirements for the power management system and controller. Battery lifetime can be increased differently by type of battery, but an exemplary battery can have increased of maximum lifetime with charge levels between 40-60% or 25-75% (e.g., NiMH), which can provide secondary control requirements for the generator and solar PV system that can be implemented using exemplary converters. One exemplary energy management control can always keep selected battery control conditions (e.g., when to charge and withdraw electrical energy), then receive solar PV power at the controlled or maximum amount that does not conflict with the battery condition, then drive generator to achieve reduced overall power consumption over a selected time period. In one embodiment, the solar PV system is driven at less than maximum point tracking to provide acceptable battery control. In addition, power and energy management control can vary dependent on relative proportions of energy supplied from different energy sources (e.g., storage, solar PV system, or generator).

In one embodiment, the power management system and controller can determine the selected power flowing from and to the energy storage system, from the engine and/or from the solar PV based on respective forecasts and estimates for solar PV power and refrigeration consumption. The power set-points for each of the components will be based on energy and power management strategies that will address or prioritize either life-time of the individual equipment or the full system, prioritize on energy efficiency, and/or prioritize on environmental constraints. For example, a load requirement for a transport refrigeration unit can be forecast (e.g., indefinitely) using for example ambient conditions, the cargo itself, and transport refrigeration unit components. The solar PV system capability can be forecast for a relatively short time (e.g., 6 hours, 12 hours, 24 hours), however, with less certainty. Embodiments for energy management control using the power management system and controller can selectively control the amount of energy from each of the storage (e.g., battery), the solar PV system, or the generator using the forecast information. Further, the energy management control can prioritize overall energy consumption by different modes of use such as but not limited to environmental friendly (e.g., prioritize renewable energy sources), overall power consumption (e.g., operate generator at peak efficiency), field conditions (e.g., utilize the solar PV system or battery to reduce noise near a hazardous location), operation convenience (e.g., the generator to load and the solar PV system to charge battery, or the generator to charge battery and the solar PV system to the load).

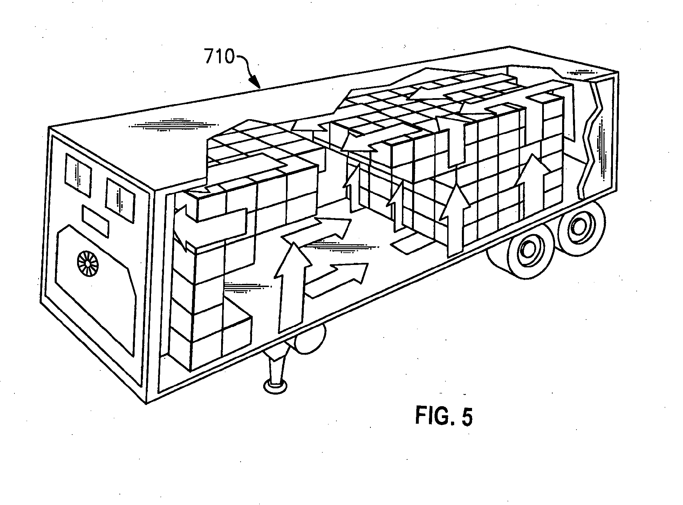

Mechanical integration of the solar PV system 320 can be achieved without significant modification to the trailer. The form profile of the trailer needs to be maintained low to avoid damage from air-flow when the vehicle is in motion. Trailers are designed to be handled by cranes, and may be stacked on rail yards. Often, maintenance personnel need to walk on the roofs as part of hitching and unhitching to cranes. Embodiments of the application incorporate removable and re-installable solar PV systems with no loss of functionality of the container during shipping, handling and/or maintenance. As shown in FIG. 5, a frame 710 in one embodiment can allow for installation of a solar film that will shield the container from solar radiation (a physical barrier), and allow removal for shipping and handling, allow access for maintenance while achieving a low profile. For example, the frame 710 can be mechanically fastened to container corners using existing features. Alternatively, the solar PV film can be mounted to a backing sheet for attachment or removal from the container without modification to the container itself. In one embodiment, the solar PV system can be additionally selectively mounted on an additional side of the container or trailer.

Embodiments of the transport refrigeration systems and methods can increase or maximize the use of solar energy during the times that it is available. In one embodiment, the solar PV system is a high efficiency solar PV system and power management system 40 constantly monitors and dynamically draws the power from the solar PV system to achieve efficient operations of the solar PV system (e.g. over an operational interval or instantaneously). To maintain the critical functional requirements of the refrigeration system, the power management system 40 also needs to handle the dynamics of energy supply and demand in real-time. In one embodiment, a solar-assisted refrigeration system is provided where the solar availability (e.g. , like the energy availability from a falling elevator) is a random variable that needs to be dynamically adapted to by the power management controller.

Embodiments of an all electric transportation refrigeration system can reduce mechanical hardware such as the stand-by motor, clutches, belts, and pulleys, which can be replaced by cheaper, efficient, and more robust electrical hardware.

The all-electric system can improve performance by enabling better control algorithms that can seamlessly transition between available energy sources as available. Since solar energy availability can fluctuate, it is important to have a control system that can seamlessly transition between solar power, additional energy sources and the generator to ensure that the refrigeration system power needs are always met.

Embodiments of the transport refrigeration system have various advantages. The use of thin film solar PV enables increased or maximized coverage over the trailer surfaces; the solar PV is removable and re-installable on the trailer, e.g., no loss of functionality to the trailer; solar utilization is increased or maximized by a peak-power tracking in the controller to follow the power profile of the PV system; overall system controllability is improved over the conventional direct drive system since mechanical actuators are replaced with electrical and electronic systems; fuel-savings are increased or maximized through power management system that seamlessly transitions between available energy sources as required by the load; hardware reduction is achieved by eliminating the stand-by motor and associated mechanical drive components, and reliability is increased by eliminating two-thirds of the serviceable mechanical components found in conventional systems, such as idler pulleys, vibrasorbers, most belts, fan shafts, the compressor shaft seal and clutch

Embodiments of the transport refrigeration system (hybrid-electric) enable it to have power from the engine and solar PV cells available for use in the various parts of the refrigeration unit at any given time. In addition, the controller can intelligently manage the storage system and can also be used to start-up the diesel generator when needed. Embodiments of the transport refrigeration system can incorporate such algorithmic features to use the available solar energy, all of which are enabled by the all-electric system

It should be understood that although the present application has been described as useful in transport refrigeration systems, those of skill in the art will readily understand and appreciate that the present invention may also be useful, and provide many benefits, in other types of refrigeration systems.

Exemplary containers and transport refrigeration systems described herein may be towed by a semi-truck for road transport. However, those having ordinary skill in the art will appreciate that exemplary containers according to embodiments of the application is not limited to such trailers and may encompass, by way of example only and not by way of limitation, transport refrigeration systems for intermodal use, trailers adapted for piggy-back use, railroad cars, and container bodies contemplated for land and sea service.

Components of the transport refrigeration unit (e.g., motors, fans, sensors), as known to one skilled in the art, can communicate with a controller (e.g., transport refrigeration unit) through wire or wireless communications. For example, wireless communications can include one or more radio transceivers such as one or more of 802.11 radio transceiver, Bluetooth radio transceiver, GSM/GPS radio transceiver or WIMAX (802.16) radio transceiver. Information collected by sensor and components can be used as input parameters for a controller to control various components in transport refrigeration systems. In one embodiment, sensors may monitor additional criteria such as humidity, species concentration or the like in the container.

Embodiments of systems, apparatus, and/or methods can provide power management system configurations and control for integrating solar power into the electrical system of a transport refrigeration system. Embodiments can ensure real-time allocation of power flow into the refrigeration system, both as a function of load or demand, and/or solar energy availability. In one embodiment, thin-film solar fabrics removably attached to the surfaces of the container or trailer body to allow removal and re-installation depending on operational needs in the field.

While the present invention has been described with reference to a number of specific embodiments, it will be understood that the true scope of the invention should be determined only with respect to the claims. Further, while in numerous cases herein wherein systems and apparatuses and methods are described as having a certain number of elements it will be understood that such systems, apparatuses and methods can be practiced with fewer than the mentioned certain number of elements. Also, while a number of particular embodiments have been set forth, it will be understood that features and aspects that have been described with reference to each particular embodiment can be used with each remaining particularly set forth embodiment.

## Claims

1. A transport refrigeration system, comprising:
a compressor (22);
a first electric motor (26) that provides a motive force to the compressor;
at least one fan (52,56);
a second electric fan motor (54,58,354) that provides a motive force to the fan;
a solar PV electrical power source (320);
an electric energy power source (330);
a engine driven generator electrical power source (310); and
a power management controller (40,440) coupled to route power selectively and concurrently from two of the electrical power sources to provide electrical power to the first motor and the second motor, wherein the received power is provided responsive to a dynamic load of the transport refrigeration system;
**characterised in that**: the power management controller comprises:
an AC power bus to connect the engine driven generator electrical power source to the first electric motor and the second electric fan motor;
a first control circuit (442) connected to control the generator electrical power source;
a first DC/ AC converter connected to the solar PV electrical power source and the AC power bus;
a second control circuit (444) connected to control the solar PV electrical power source;
a second DC/ AC converter connected to the energy storage electrical power source and the AC power bus; and
a third control circuit (446) connected to control the energy storage electrical power source.

2. The transport refrigeration system of claim 1, wherein the dynamic load comprises a single phase AC load, a three phase AC load or any DC load.

3. The system of claim 1, including a condenser fan assembly (50) having at least one fan motor (54,58) and an evaporator fan assembly (80) having at least one fan motor (88,90,92) and wherein the power management controller (40,440) routes electrical power to the condenser fan assembly and the evaporator fan assembly.

4. The transport refrigeration system of claim 1, wherein the power management controller (40,440) provides peak-power tracking of the solar PV system (320).

5. The transport refrigeration system of claim 1, wherein the power management controller (40,440) transitions between the solar PV system (320), the electric energy power source (330) and the generator (310) to provide temperature control for a container.

## Patentansprüche

1. Transportkühlsystem, das Folgendes umfasst:
einen Kompressor (22);
einen ersten Elektromotor (26), der eine Antriebskraft an den Kompressor bereitstellt;
wenigstens ein Gebläse (52, 56);
einen zweiten Gebläseelektromotor (54, 58, 354), der eine Antriebskraft an das Gebläse bereitstellt;
eine Photovoltaik-Solarstromquelle (320);
eine elektrische Stromquelle (330);
eine motorgetriebene, elektrische Generatorstromquelle (310); und
eine Energieverwaltungssteuerung (40, 440), die gekoppelt ist, um Energie selektiv und gleichzeitig von zwei der elektrischen Stromquellen zu leiten, um elektrischen Strom an den ersten Motor und den zweiten Motor bereitzustellen, wobei der empfangene Strom als Reaktion auf eine dynamische Last des Transportkühlsystems bereitgestellt wird;
**dadurch gekennzeichnet, dass**: die Energieverwaltungssteuerung Folgendes umfasst:
einen Wechselstrom-Energiebus, um die motorgetriebene, elektrische Generatorstromquelle mit dem ersten Elektromotor und dem zweiten Gebläseelektromotor zu verbinden;
eine erste Steuerungsschaltung (442), die verbunden ist, um die elektrische Generatorstromquelle zu steuern;
einen ersten Gleichstrom-/Wechselstrom-Umsetzer, der mit der Photovoltaik-Solarstromquelle und dem Wechselstrom-Energiebus verbunden ist;
eine zweite Steuerungsschaltung (444), die verbunden ist, um die Photovoltaik-Solarstromquelle zu verbinden;
einen zweiten Gleichstrom-/Wechselstrom-Umsetzer, der mit der Energiespeicher-Stromquelle und dem Wechselstrom-Energiebus verbunden ist; und
eine dritte Steuerungsschaltung (446), die verbunden ist, um die Energiespeicher-Stromquelle zu steuern.

2. Transportkühlsystem nach Anspruch 1, wobei die dynamische Last eine einphasige Wechselstromlast, eine dreiphasige Wechselstromlast oder eine beliebige Gleichstromlast ist.

3. System nach Anspruch 1, das eine Kondensatorgebläseanordnung (50) mit wenigstens einem Gebläsemotor (54, 58) und eine Verdampfergebläseanordnung (80) mit wenigstens einem Gebläsemotor (88, 90, 92) beinhaltet, und wobei die Energieverwaltungssteuerung (40, 440) elektrischen Strom zur Kondensatorgebläseanordnung und der Verdampfergebläseanordnung leitet.

4. Transportkühlsystem nach Anspruch 1, wobei die Energieverwaltungssteuerung (40, 440) Spitzenleistungsnachlaufdes Photovoltaik-Solarsystems (320) bereitstellt.

5. Transportkühlsystem nach Anspruch 1, wobei die Stromverwaltungssteuerung (40, 440) zwischen dem Photovoltaik-Solarsystem (320), der elektrischen Stromquelle (330) und dem Generator (310) wechselt, um Temperaturkontrolle für einen Behälter bereitzustellen.

## Revendications

1. Système de réfrigération de transport, comprenant :
un compresseur (22) ;
un premier moteur électrique (26) qui produit une force motrice vers le compresseur ;
au moins un ventilateur (52, 56) ;
un deuxième moteur électrique (54, 58, 354) qui produit une force motrice vers le ventilateur ;
une source (320) d'alimentation électrique PV solaire ;
une source (330) d'alimentation en énergie électrique ;
une source (310) d'alimentation électrique de générateur entraînée par un moteur ; et un contrôleur de gestion de l'alimentation (40, 440) couplé pour acheminer la puissance de manière choisie et de manière concomitante à partir de deux des sources d'alimentation électrique pour apporter de l'énergie électrique au premier moteur et au deuxième moteur, la puissance reçue étant conçue pour être sensible à une charge dynamique du système de réfrigération de transport ;
**caractérisé en ce que** : le contrôleur de gestion de l'alimentation comprend :
un bus d'alimentation en CA servant à relier la source d'alimentation électrique de générateur entraînée par un moteur avec le premier moteur électrique et avec le deuxième moteur électrique ;
un premier circuit de commande (442) branché pour réguler la source d'alimentation électrique de générateur ;
un premier convertisseur CC/CA relié à la source d'alimentation électrique PV solaire et au bus d'alimentation en CA ;
un deuxième circuit de commande (444) branché pour commander la source d'alimentation électrique PV solaire ;
un deuxième convertisseur CC/CA branché à la source d'alimentation électrique de stockage d'énergie et au bus d'alimentation en CA ; et
un troisième circuit de commande (446) branché pour réguler la source d'alimentation électrique de stockage d'énergie.

2. Système de réfrigération de transport selon la revendication 1, dans lequel la charge dynamique comprend une charge de CA monophasé, une charge de CA triphasé ou toute charge de CC.

3. Système selon la revendication 1, comprenant un ensemble (50) à ventilateur de condenseur comportant au moins un moteur de ventilateur (54, 58) et un ensemble (80) à ventilateur d'évaporateur comportant au moins un moteur de ventilateur (88, 90, 92), et dans lequel le contrôleur de gestion de l'alimentation (40, 440) achemine la puissance électrique jusqu'à l'ensemble à ventilateur de condenseur et jusqu'à l'ensemble à ventilateur d'évaporateur.

4. Système de réfrigération de transport selon la revendication 1, dans lequel le contrôleur de gestion de l'alimentation (40, 440) procure un suivi des pics de puissance du système (320) PV solaire.

5. Système de réfrigération de transport selon la revendication 1, dans lequel le contrôleur de gestion de l'alimentation (40, 440) transite entre le système (320) PV solaire, la source (330) d'alimentation en énergie électrique et le générateur (310) pour procurer une régulation de la température pour un conteneur.
